# EUROPEAN PATENT APPLICATION

(11) **EP 3 372 638 A1**
(43) Date of publication of application: **12.09.2018**
(21) Application number: 16861784.3
(22) Date of filing: 02.11.2016
(51) Int. Cl.: C08L 15/00, B60C 1/00, C08C 19/25, C08K 3/36, C08L 7/00, C08L 9/00

(54) **RUBBER COMPOSITION AND TIRE**

(30) Priority: 05.11.2015 JP 2015217928
(71) Applicant: Bridgestone Corporation, Tokyo 104-8340 (JP)
(72) Inventor: SAJI, Shunsuke, Tokyo 104-8340 (JP); SAKURAI, Hideyuki, Tokyo 104-8340 (JP)
(74) Representative: Oxley, Robin John George
(86) International application number: PCT/JP2016/004803
(87) International publication number: WO 2017/077712

(57) **Abstract**

Provided is a rubber composition capable of achieving both the low loss property and the wear resistance at a high degree, and a tire capable of achieving both the low loss property and the wear resistance at a high degree. The rubber composition comprises: a rubber component comprising at least a polymer component P1 and a polymer component P2; and a filler comprising at least silica, wherein: a glass-transition temperature Tg₁ of the polymer component P1 and a glass-transition temperature Tg₂ of the polymer component P2 satisfy a relation that 0 < |Tg₁-Tg₂| ≤ 20; the polymer components P1 and P2 are insoluble to each other in sub-micron order; and 80% or more of a total amount of the filler exists in a phase of the polymer component P2. The tire uses the rubber composition for a tread member.

## Description

### TECHNICAL FIELD

This disclosure relates to a rubber composition and a tire.

### BACKGROUND

Recently, relating to the currency of global carbon dioxide emission limits accompanying increased concerns with environment problems, requirement for fuel consumption reduction of automobiles is increasing. In order to satisfy such requirement, with respect to tire performances, reduction of rolling resistance is desired as well. Conventionally, as a method for reducing rolling resistance of tire, optimization of tire structure has been studied. In addition to currently performed as an ordinary method is to use one with low tan*δ* (hereinafter referred to as "low loss property") and excellent low heat generation as a rubber composition applied in a tire.

As a method for obtaining such rubber composition with low heat generation, considered is reduction of fillers such as carbon black, silica and the like, or use of carbon black with large particle size, etc. However, these methods may deteriorate reinforcement performance, wear resistance and gripping performance on wet road surface of the rubber composition.

Then, for example, studied is to blend rubbers with different glass-transition temperatures (Tg), to thereby provide a rubber composition for tire tread appropriate for use in production of a tire excellent in balance of wet gripping performance and low rolling resistance, without deteriorating the wear resistance of the tire (see, e.g., PTL1).

### CITATION LIST

### Patent Literature

PTL1: JPH08-27313A

### SUMMARY

### (Technical Problem)

However, there was a problem that when using the rubber composition as disclosed in PTL1, the low loss property and the wear resistance of the rubber composition cannot be both achieved at a high degree.

It thus would be helpful to provide a rubber composition capable of achieving both the low loss property and the wear resistance at a high degree. Moreover, it would be helpful to provide a tire capable of achieving both the low loss property and the wear resistance at a high degree.

### (Solution to Problem)

The rubber composition according to this disclosure is a rubber composition comprising: a rubber component comprising at least a polymer component P1 and a polymer component P2; and a filler comprising at least silica, wherein: a glass-transition temperature Tg₁ of the polymer component P1 and a glass-transition temperature Tg₂ of the polymer component P2 satisfy a relation that 0 < |Tg₁-Tg₂| ≤ 20; the polymer components P1 and P2 are insoluble to each other in sub-micron order; and 80% or more of a total amount of the filler exists in a phase of the polymer component P2.

Each glass-transition temperature (Tg) of the polymer components may be measured via differential scanning calorimetry (DSC), for example, measured by using a differential scanning calorimeter manufactured by TA Instruments at a sweep rate of 5°C/min to 10°C/min. In this disclosure, |Tg₁-Tg₂| refers to the absolute value of the difference of Tg₁ and Tg₂.

An existence ratio of the filler existing in the phase of the polymer component P2 may be measured, for example, by measuring a smooth surface of a sample cut with microtome in a measurement range 2 µm × 2 µm, by using with an atomic force microscope (AFM), e.g., MFP-3D manufactured by ASYLUM RESEARCH. For example, in the case of measuring a system in which the polymer components P1 and P2 are separated into two phases, based on a ternarized image obtained by converting with a histogram the two polymer components and the filler portion of the obtained AFM image into a ternarized image, the filler areas respectively included in the phases of the two polymer components are determined, and the ratio of the filler existing in the polymer component P2 is calculated from the filler total amount in the measured area. In the case where the filler is on the interface of the two polymer components, the areas of the filler are divided by connecting two points where each polymer component and the filler contact each other.

In this disclosure, in a domain obtained by ternarizing the image obtained with AFM and then extracting a part corresponding to the filler, a domain width (region width) of the phase of the polymer component refers to, in the case where a domain is circular, the diameter of the circle; and refers to, in the case where a plurality of domains are amorphous such as a mottled pattern, a maximum length of the domains in a direction orthogonal to each longitudinal direction of the domains (a direction in which both ends of one domain have a maximum linear distance). The calculation is performed with the removed part compensated if the filler is added into one polymer phase, and with the same remaining removed if the filler is on the interface of the domains of the two polymer components.

An average aggregate area of the filler may be obtained by, for example, obtaining an aggregate area of the filler portion with an image obtained via FIB/SEM within a measurement range of 4 µm × 4 µm, and calculating the average aggregate area of the filler portion in numerical average (arithmetic average) from the entire aggregate area and the number of aggregates of the filler portion. During the calculation, particles in contact with the edges (sides) of the image are not counted, and particles of 20 pixels or less are considered as noise and not counted.

In this disclosure, sub-micron order refers to a range of 100 nm or more and less than 1000 nm.

In this disclosure, a (co)polymer refers to a polymer or a copolymer. A modified polymer refers to a modified (co)polymer. In the case where a modified functional group is, e.g., amino group, a modification ratio in a modified polymer may be measured according to the following method. By dissolving the modified polymer in toluene, and then precipitating in a large amount of methanol, amino group containing compounds which are not bonded to the modified polymer are separated from the rubber, and then dried. Polymers subjected to the present treatment are used as samples, to quantify their total amino group contents according to the "testing method for total amine values" according to JIS K7237. Next, the samples are subjected to quantification of their contents of secondary amino groups and tertiary amino groups according to the "acetylacetone blocked method". O-nitrotoluene is used as a solvent to dissolve the samples, added with acetylacetone, and subjected to potential-difference titration with perchloric acid acetic acid solution. The primary amino group content is obtained by subtracting the contents of secondary amino groups and tertiary amino groups from the entire amino group content, and by dividing the same with the polymer weight used in the analysis, the content of primary amino groups bonded to the polymer is obtained. Regarding the tertiary amino group content, by dissolving the polymer in toluene, and then precipitating in a large amount of methanol, amino group containing compounds which are not bonded to the modified polymer are separated from the rubber, and then dried. The polymers subjected to the present treatment are used as samples, to quantify their tertiary amino group content according to the "acetylation method". O-nitrotoluene + acetic acid is used as a solvent to dissolve the samples, added with formic acid/acetic anhydride mixed solution, and subjected to potential-difference titration with perchloric acid acetic acid solution. The content of tertiary amino groups bonded to the polymer is obtained by dividing the tertiary amino group content with the polymer weight used in the analysis.

Each weight-average molecular weight of the polymer components may be calculated, e.g., via gel permeation chromatography (GPC) in terms of standard polystyrene.

In this disclosure, examples of a hydrolyzable group include, e.g., a trialkylsilyl group such as trimethylsilyl group, tert-butyldimethylsilyl group and the like; -O(trialkylsilyl) group; -S(trialkylsilyl) group; -COO(trialkylsilyl) group; and -N(trialkylsilyl) group.

In this disclosure, (thio)isocyanate group refers to isocyanate group or thioisocyanate group. (Thio)epoxy group refers to epoxy group or thioepoxy group. (Thio)ketone group refers to ketone group or thioketone group. (Thio)aldehyde group refers to aldehyde group or thioaldehyde group. (Thio)carboxylic acid ester group refers to carboxylic acid ester group or thiocarboxylic acid ester group.

Further, in this disclosure, "C₁ to C₂₀ monovalent aliphatic or alicyclic hydrocarbon group" refers to "C₁ to C₂₀ monovalent aliphatic hydrocarbon group or C₃ to C₂₀ monovalent alicyclic hydrocarbon group". The same goes with the case of divalent hydrocarbon group.

In this disclosure, a halogen atom refers to fluorine, chlorine, bromine or iodine.

In this disclosure, a TMS refers to a trimethylsilyl group.

### (Advantageous Effect)

According to this disclosure, it is possible to provide a rubber composition capable of achieving both the low loss property and the wear resistance at a high degree. Moreover, according to this disclosure, it is possible to provide a tire capable of achieving both the low loss property and the wear resistance at a high degree.

### BRIEF DESCRIPTION OF THE DRAWINGS

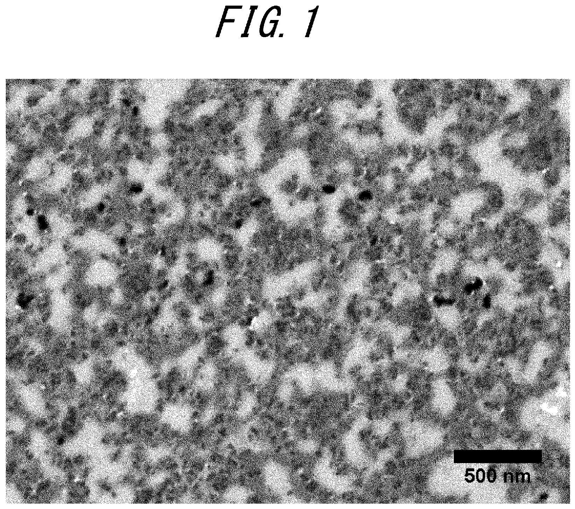

FIG. 1 is an FIB/SEM photograph of Example 2.

### DETAILED DESCRIPTION

Embodiments of this disclosure are described hereinafter. The following provides further illustration for this disclosure, which is only provided for illustration and in no way limits this disclosure.

### (Rubber composition)

The rubber composition according to this disclosure contains at least a rubber component containing at least a polymer component P1 and a polymer component P2, and a filler containing at least silica, and further contains other components as necessary. Here, since a glass-transition temperature Tg₁ of the polymer component P1 and a glass-transition temperature Tg₂ of the polymer component P2 satisfy a relation that 0 < |Tg₁-Tg₂| ≤ 20, and the polymer components P1 and P2 are insoluble to each other in sub-micron order, a morphology of the rubber composition is refined, the filler containing silica selectively exists at no less than a specific ratio in the phase of the refined polymer component P2. Thereby, it is possible to achieve both the low loss property and the wear resistance of the rubber composition at a high degree.

### <Rubber component>

The rubber component contains at least the polymer component P1 and the polymer component P2. The glass-transition temperature Tg₁ of the polymer component P1 and the glass-transition temperature Tg₂ of the polymer component P2 satisfy the relation that 0 < |Tg₁-Tg₂| ≤ 20, and the polymer components P1 and P2 are insoluble to each other in sub-micron order. Therefore, after compounding, the polymer components are separated into two or more polymer phases having different glass-transition temperatures (Tg). The polymer components P1 and P2 may appear to the naked eye as being compatible with each other as long as they are phase-separated in sub-micron order. As a method for observing whether the polymer components are insoluble to each other in sub-micron order, those having different staining conditions when observing a region of 4 µm × 4 µm of the rubber composition by using FIB/SEM are evaluated as insoluble to each other.

For example, in the case of compounding the polymer components P1, P2 and P3, in one embodiment, all of P1, P2 and P3 are insoluble to each other, and in another embodiment, for example, P1 and P2 are insoluble to each other, and P3 is soluble to either one of P1 or P2.

### <Polymer component P1>

The polymer component P1 may be appropriately selected from conventionally known polymer components as long as it satisfies the aforementioned relation that 0 < |Tg₁-Tg₂| ≤ 20 and the polymer components P1 and P2 are insoluble to each other in sub-micron order. Examples of the polymer component P1 include natural rubber, isoprene rubber, styrene-butadiene rubber, and butadiene rubber.

The polymer component P1 may be, e.g., a diene based copolymer. Among diene based copolymers, a copolymer of a diene-based monomer and an aromatic vinyl compound is preferable, a copolymer of 50 mass% to 80 mass% of a diene-based monomer and 20 mass% to 50 mass% of an aromatic vinyl compound with respect to all monomer components of the polymer component P1 is more preferable.

Examples of the diene-based monomer include conjugated diene compounds such as 1,3-butadiene, isoprene, 1,3-pentadiene, 2,3-dimethylbutadiene, 2-phenyl-1,3-butadiene, and 1,3-hexadiene. Among these, from the viewpoint of easy adjustment of the glass-transition temperature Tg₁ of the polymer component P1, 1,3-butadiene is preferable. These conjugated diene compounds may be used alone or in a combination of two or more.

Examples of the aromatic vinyl compound include styrene, α-methyl styrene, 1-vinylnaphthalene, 3-vinyl toluene, ethylvinylbenzene, divinylbenzene, 4-cyclohexylstyrene, and 2,4,6-trimethylstyrene. Among these, from the viewpoint of easy adjustment of the glass-transition temperature Tg₁ of the polymer component P1, styrene is preferable. These aromatic vinyl compounds may be used alone or in a combination of two or more.

A polymerization method for obtaining the polymer component P1 is not specifically limited, and may be one conventionally known. Examples of such polymerization method include anionic polymerization, coordination polymerization and emulsion polymerization.

A molecular weight of the polymer component P1 is not specifically limited. By setting the peak molecular weight to 50,000 or more, good breaking resistance and wear resistance can be obtained, and by setting the same to 700,000 or less, good processability can be obtained. Further, in order to achieve both the breaking resistance, the wear resistance and the processability at a high degree, it is preferable that the peak molecular weight is 100,000 to 350,000.

### <Polymer component P2>

Examples of the polymer component P2 include natural rubber, isoprene rubber, styrene-butadiene rubber, butadiene rubber, and modified compounds thereof. It is preferable that the polymer component P2 is a modified polymer. Thereby, it is possible to further raise the ratio of the filler existing in the phase of the polymer component P2, which is advantageous for the low heat generating property and the wear resistance.

By using the modified polymer as the polymer component P2 and by preparing a masterbatch, further improvement effect of the low loss property and the wear resistance is expectable.

The modified functional group in the modified polymer is not particularly limited, and may be appropriately selected depending on the purpose. Preferable examples of the modified functional group include modified functional groups interactive with the filler as described below. Such modified functional groups can improve the interactivity with the filler, and to thereby achieve both the low loss property and the wear resistance at a higher degree. Here, the "modified functional groups having interactivity with the filler" refer to functional groups capable of forming for example, covalent bonds or an intermolecular force (an intermolecular force such as ion-dipole interaction, dipole-dipole interaction, hydrogen bond, Van der Waals force and the like) between the modified functional groups and a surface of the filler (e.g., silica). A modified functional group having high interactivity with the filler (e.g., silica) is not specifically limited. Preferable examples include nitrogen containing functional groups, silicon containing functional groups and oxygen containing functional groups.

The polymer component P2 is preferably a (co)polymer obtained by polymerizing 80 to 100 mass% of a diene-based monomer and 0 to 20 mass% of an aromatic vinyl compound with respect to all the monomer components of the polymer component P2. Further, it is preferable that the polymer component P2 is a modified (co)polymer obtained by modifying a (co)polymer. Such modified (co)polymer can improve the low loss property and the wear resistance of the rubber composition.

Examples of the diene-based monomer used in the polymerization of the polymer component P2 include conjugated diene compounds such as 1,3-butadiene, isoprene, 1,3-pentadiene, 2,3-dimethylbutadiene, 2-phenyl-1,3-butadiene, and 1,3-hexadiene. Among these, from the viewpoint of easy adjustment of the glass-transition temperature Tg₂ of the polymer component P2, 1,3-butadiene is preferable. These conjugated diene compounds may be used alone or in a combination of two or more.

Examples of the aromatic vinyl compound used in the polymerization of the polymer component P2 include styrene, α-methyl styrene, 1-vinyl naphthalene, 3-vinyltoluene, ethylvinylbenzene, divinylbenzene, 4-cyclo hexyl styrene and 2,4,6-trimethylstyrene. Among these, from the viewpoint of easy adjustment of the glass-transition temperature Tg₂ of the polymer component P2, styrene is preferable. These aromatic vinyl compounds may be used alone or in a combination of two or more.

In the rubber composition according to this disclosure, it is preferable that the polymer component P1 is natural rubber or isoprene rubber, and the polymer component P2 is a modified polymer. Thereby, it is possible to achieve both the low loss property and the wear resistance at a higher degree. Without wishing to be bound by any theory, it is believed that since the polymer component P1 is natural rubber or isoprene rubber, the rubber composition exhibits high breaking resistance, and since polymer skeletons of natural rubber and isoprene rubber have low compatibility with silica, silica is likely to exist in the polymer component P2 side, i.e., the modified polymer side.

A polymerization method for obtaining the polymer component P2 is not specifically limited, and may be one conventionally known. Examples of such polymerization method include anionic polymerization, coordination polymerization and emulsion polymerization. The modifier for obtaining the modified (co)polymer as the polymer component P2 may be appropriately selected from conventionally known modifiers. The modifier may be either a modifier reactive with polymerizable active terminals of anionic polymerization or coordination polymerization, or an amide moiety of a lithium amide compound used as a polymerization initiator.

The modifier for obtaining the modified (co)polymer as the polymer component P2 may be appropriately selected from conventionally known modifiers having the aforementioned modified functional group.

It is preferable that the modifier is a modifier having at least one atom selected from silicon atom, nitrogen atom or oxygen atom.

It is preferable that the modifier is one or more selected from the group consisting of alkoxysilane compounds, hydrocarbyloxy silane compounds and combinations thereof since the modifier has high interactivity with respect to the filler (e.g., silica).

The alkoxysilane compounds are not specifically limited, but are more preferably alkoxysilane compounds represented by the following general formula (I).

R¹ₐ-Si-(OR²)₄₋ₐ ... (I)

In general formula (I), R¹ and R² independently represent a C₁ to C₂₀ monovalent aliphatic hydrocarbon group or a C₆ to C₁₈ monovalent aromatic hydrocarbon group, and a is an integer of 0 to 2 and in the case where OR² is plural, each OR² may be either identical to or different from each other. Moreover, the molecule does not contain active proton.

Specific examples of the alkoxysilane compound represented by the aforementioned general formula (I) include N-(1,3-dimethylbutylidene)-3-(triethoxysilyl)-1-propaneamine, tetramethoxysilane, tetraethoxysilane, tetra-n-propoxy silane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimetridimethoxysilane, methylphenyldimethoxysilane, dimethyldiethoxysilane, vinyltrimethoxysilane, vinyltriethoxysilane, and divinyldiethoxysilane. Among these, N-(1,3-dimethylbutylidene)-3-(triethoxysilyl)-1-propaneamine, tetraethoxysilane, methyltriethoxysilane and dimethyldiethoxysilane are favorable. The alkoxysilane compounds may be used alone or in a combination of two or more.

The hydrocarbyloxy silane compound is preferably a hydrocarbyloxy silane compound represented by the following general formula (II).

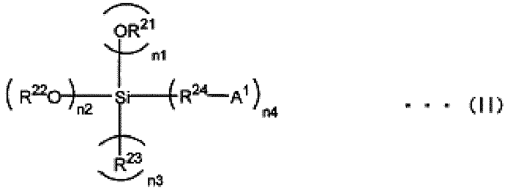

In the general formula (II), n1+n2+n3+n4=4 (where n2 is an integer of 1 to 4; n1, n3 and n4 are integers of 0 to 3); A¹ is at least one functional group selected from saturated cyclic tertiary amine compound residual group, unsaturated cyclic tertiary amine compound residual group, ketimine residual group, nitrile group, (thio)isocyanate group, (thio)epoxy group, isocyanuric acid trihydrocarbyl ester group, dihydrocarbyl carbonate ester group, nitrile group, pyridine group, (thio)ketone group, (thio)aldehyde group, amide group, (thio)carboxylic acid ester group, metallic salt of (thio)carboxylic acid ester, carboxylic anhydride residual group, carboxylic halide residual group, or primary, secondary amide group or mercapto group having hydrolyzable group, and may be either identical or different when n4 is 2 or more; A¹ may be a divalent group forming a cyclic structure by bonding with Si; R²¹ is a C₁ to C₂₀ monovalent aliphatic or alicyclic hydrocarbon group or a C₆ to C₁₈ monovalent aromatic hydrocarbon group, and may be either identical or different when n1 is 2 or more; R²³ is a C₁ to C₂₀ monovalent aliphatic or alicyclic hydrocarbon group, a C₆ to C₁₈ monovalent aromatic hydrocarbon group or a halogen atom, and may be either identical or different when n3 is 2 or more; R²² is a C₁ to C₂₀ monovalent aliphatic or alicyclic hydrocarbon group or a C₆ to C₁₈ monovalent aromatic hydrocarbon group, either one of which may contain a nitrogen atom and/or a silicon atom, and may be either identical or different, or form a ring together when n2 is 2 or more; and R²⁴ is a C₁ to C₂₀ divalent aliphatic or alicyclic hydrocarbon group, or a C₆ to C₁₈ divalent aromatic hydrocarbon group, and may be either identical or different when n4 is 2 or more.

The hydrolyzable group in the primary or secondary amino group having hydrolyzable group or the mercapto group having hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (III).

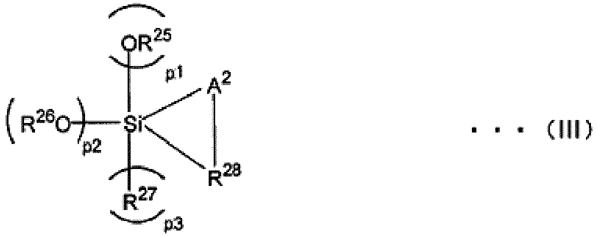

In the general formula (III), p1+p2+p3=2 (where p2 is an integer of 1 or 2, p1 and p3 are integers of 0 or 1); A² is NRa (Ra is a monovalent hydrocarbon group, hydrolyzable group or nitrogen-containing organic group) or sulfur; R²⁵ is a C₁ to C₂₀ monovalent aliphatic or alicyclic hydrocarbon group, or a C₆ to C₁₈ monovalent aromatic hydrocarbon group; R²⁷ is a C₁ to C₂₀ monovalent aliphatic or alicyclic hydrocarbon group, a C₆ to C₁₈ monovalent aromatic hydrocarbon group, or a halogen atom; R²⁶ is a C₁ to C₂₀ monovalent aliphatic or alicyclic hydrocarbon group, a C₆ to C₁₈ monovalent aromatic hydrocarbon group, or a nitrogen-containing organic group, any one of which may contain a nitrogen atom and/or a silicon atom, and may be either identical or different, or form a ring together when p2 is 2; and R²⁸ is a C₁ to C₂₀ divalent aliphatic or alicyclic hydrocarbon group or a C₆ to C₁₈ divalent aromatic hydrocarbon group. The hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (IV) or (V).

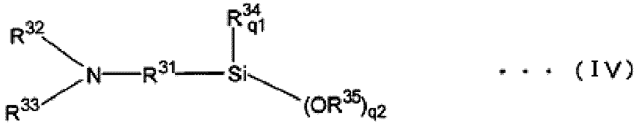

In the general formula (IV), q1+q2=3 (where q1 is an integer of 0 to 2, and q2 is an integer of 1 to 3); R³¹ is a C₁ to C₂₀ divalent aliphatic or alicyclic hydrocarbon group or a C₆ to C₁₈ divalent aromatic hydrocarbon group; R³² and R³³ are each independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more.

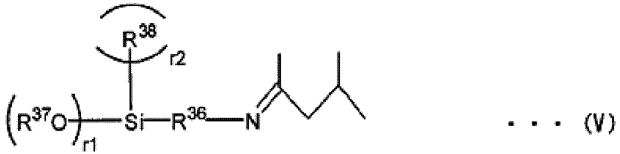

In the general formula (V), r1+r2=3 (where r1 is an integer of 1 to 3, and r2 is an integer of 0 to 2); R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

The hydrocarbyl oxysilane compound represented by the general formula (II) is preferably a hydrocarbyl oxysilane compound having two or more nitrogen atoms represented by the following general formula (VI) or (VII). Thereby, it is possible to achieve both the low loss property and the wear resistance at a high degree.

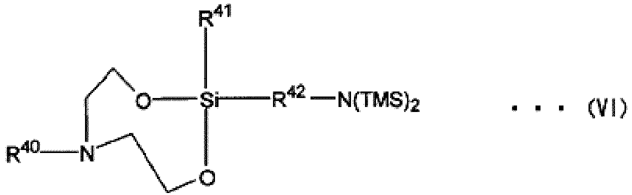

In general formula (VI), R⁴⁰ is trimethylsilyl group, a C₁ to C₂₀ monovalent aliphatic or alicyclic hydrocarbon group, or a C₆ to C₁₈ monovalent aromatic hydrocarbon group; R⁴¹ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group; and R⁴² is a C₁ to C₂₀ divalent aliphatic or alicyclic hydrocarbon group, or a C₆ to C₁₈ divalent aromatic hydrocarbon group.

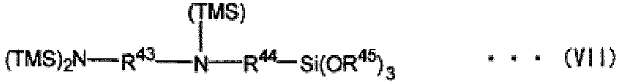

In the general formula (VII), R⁴³ and R⁴⁴ are independently a C₁ to C₂₀ divalent aliphatic or alicyclic hydrocarbon group or a C₆ to C₁₈ divalent aromatic hydrocarbon group; R⁴⁵ is a C₁ to C₂₀ monovalent aliphatic or alicyclic hydrocarbon group or a C₆ to C₁₈ monovalent aromatic hydrocarbon group, and each R⁴⁵ may be identical or different.

The hydrocarbyl oxysilane compound represented by the general formula (II) is preferably a hydrocarbyl oxysilane compound represented by the following general formula (VIII).

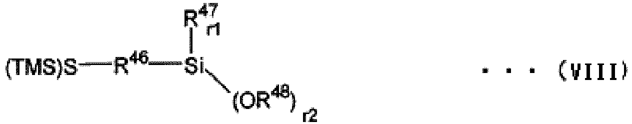

In the general formula (VIII), r1+r2=3 (where r1 is an integer of 0 to 2, and r2 is an integer of 1 to 3); R⁴⁶ is a C₁ to C₂₀ divalent aliphatic or alicyclic hydrocarbon group or a C₆ to C₁₈ divalent aromatic hydrocarbon group; R⁴⁷ and R⁴⁸ are independently a C₁ to C₂₀ monovalent aliphatic or alicyclic hydrocarbon group or a C₆ to C₁₈ monovalent aromatic hydrocarbon group. Each R⁴⁷ or R⁴⁸ may be either identical or different.

The hydrocarbyl oxysilane compound represented by the general formula (II) is preferably a hydrocarbyl oxysilane compound represented by the following general formula (IX).

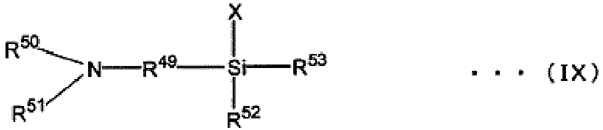

In the general formula (IX), X is a halogen atom; R⁴⁹ is a C₁ to C₂₀ divalent aliphatic or alicyclic hydrocarbon group or a C₆ to C₁₈ divalent aromatic hydrocarbon group; R⁵⁰ and R⁵¹ are independently a hydrolyzable group, a C₁ to C₂₀ monovalent aliphatic or alicyclic hydrocarbon group or a C₆ to C₁₈ monovalent aromatic hydrocarbon group, or alternatively, R⁵⁰ and R⁵¹ are bonded to form a divalent organic group; R⁵² and R⁵³ are independently a halogen atom, a hydrocarbyloxy group, a C₁ to C₂₀ monovalent aliphatic or alicyclic hydrocarbon group, or a C₆ to C₁₈ monovalent aromatic hydrocarbon group. R⁵⁰ and R⁵¹ are preferably hydrolyzable groups, and as the hydrolyzable group, trimethylsilyl group or tert-butyl dimethylsilyl group is preferable, and trimethylsilyl group is more preferable.

The hydrocarbyl oxysilane compound represented by the general formula (II) is preferably a hydrocarbyl oxysilane compound having a structure represented by the following general formulae (X) to (XIII).

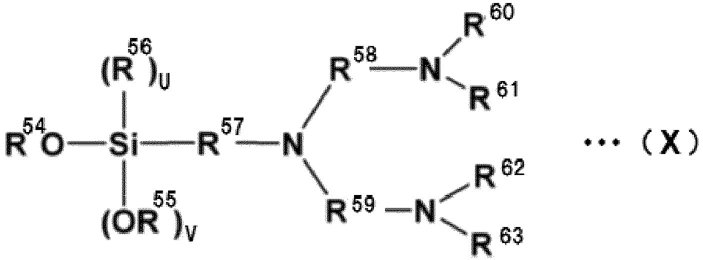

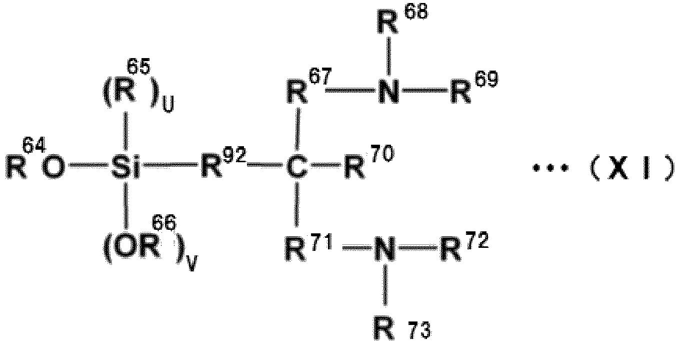

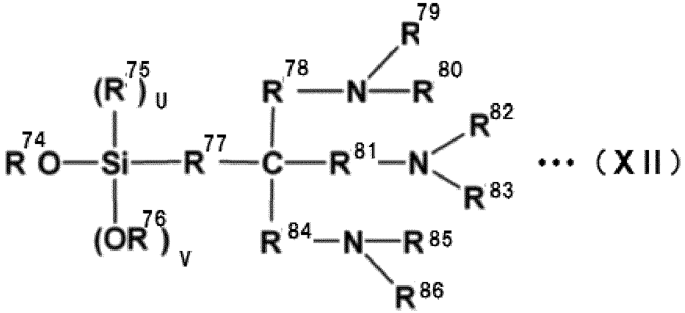

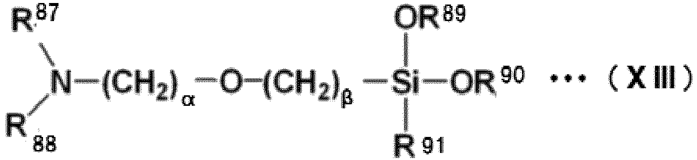

In general formulae (X) to (XIII), the signs U, V are respectively integers of 0 to 2 which satisfy U+V=2. R⁵⁴ to R⁹² in general formulae (X) to (XIII) may be either identical or different, and are C₁ to C₂₀ divalent aliphatic or alicyclic hydrocarbon group or C₆ to C₁₈ divalent aromatic hydrocarbon group. Moreover, α and β in general formula (XIII) are integers of 0 to 5.

Among compounds represented by general formulae (X) to (XII), in particular, N1,N1,N7-tetramethyl-4-((trimethoxysilyl)methyl)-1,7heptane, 2-((hexyl-dimethoxysilyl)methyl)-N1,N1,N3,N3-2-pentamethylpropane-1,3-di amine, N1-(3-(dimethylamino)propyl-N3,N3-dimethyl-N1-(3-(trimethoxysilyl)propyl )propane-1,3-diamine and 4-(3-(dimethylamino)propyl)-N1,N1,N7,N7-tetramethyl-4-((trimethoxysilyl) methyl)heptane-1,7-diamine are preferable.

Among compounds represented by general formula (XIII), in particular, N,N-dimethyl-2-(3-(dimethoxymethylsilyl)propoxy)ethaneamine, N,N-bis(trimethylsilyl)-2-(3-(trimethoxysilyl)propoxy)ethaneamine, N,N-dimethyl-2-(3-(trimethoxysilyl)propoxy)ethaneamine and N,N-dimethyl-3-(3-(trimethoxysilyl)propoxy)propane-1-amine are preferable.

The hydrocarbyloxy silane compounds represented by general formulae (II) to (XIII) are preferably used as a modifier of the polymer component P2, but may be used as a modifier of the polymer component P1 or any other polymer component as well.

The hydrocarbyl oxysilane compounds represented by general formulae (II) to (XIII) are preferably alkoxysilane compounds.

Specific examples of modifiers preferable in the case where a modified polymer as the polymer component P2 is obtained via anionic polymerization include at least one compound selected from 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone or 1-methyl-2-pyrrolidone.

The modifier is preferably an amide moiety of a lithium amide compound used as a polymerization initiator in anionic polymerization. Examples of such lithium amide compound include lithium hexamethyleneimide, lithium pyrrolizide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and combinations thereof. For example, the modifier as the amide moiety of lithium hexamethyleneimide is hexamethyleneimine, the modifier as the amide moiety of lithium pyrrolizide is pyrrolidine, and the modifier as the amide moiety of lithium piperidide is piperidine.

Preferable examples of the modifier in the case where the modified polymer as the polymer component P2 is obtained via coordination polymerization include at least one compound selected from 2-cyanopyridine or 3,4-ditrimethylsilyloxy benzaldehyde.

Preferable examples of the modifier in the case where the modified polymer as the polymer component P2 is obtained via emulsion polymerization include at least one compound selected from 3,4-ditrimethylsilyloxy benzaldehyde or 4-hexamethylene iminoalkyl styrene. These modifiers preferably used in emulsion polymerization are preferably copolymerized during emulsion polymerization as a monomer containing nitrogen atom and/or silicon atom.

The modification ratio in the modified polymer is not specifically limited and may be appropriately selected depending on the purpose. The modification ratio is, e.g., preferably 30% or more, more preferably 35% or more, particularly preferably 70% or more. Thereby, the filler containing silica exists selectively in the phase of the polymer component P2, which achieves both the low loss property and the wear resistance at a high degree.

An example of the modified polymer as the polymer component P2 is described here. First, a copolymer of styrene and 1,3-butadiene (microstructure: 10 mass% of styrene / 40 mass% of vinyl bond amount derived from 1,3-butadiene, base molecular weight (polystyrene equivalent): 180,000) is prepared as a polymer, and is modified with its terminals being anions by using N,N-bis(trimethylsilyl)-3-[diethoxy(methyl)silyl]propylamine, to obtain the modified polymer as the polymer component P2 (modification ratio: 70%, weight-average molecular weight (Mw): 200,000).

The polymer components P1 and P2 may be any one as long as satisfying the relation that 0 < |Tg₁-Tg₂| ≤ 20 and being phase-separated in sub-micron order. For example, it is preferable that an SP value (SP₁) of the polymer components P1 and an SP value (SP₂) of the polymer components P2 are different, satisfying 0.15 < |SP₁-SP₂|. Thereby, the polymer components P1 and P2 are likely to be insoluble to each other in sub-micron order.

Contents of the polymer components P1 and P2 in the rubber component are not specifically limited and may be appropriately selected depending on the purpose. A ratio of the polymer components P2 to a total amount of the rubber component is preferably 5% to 60%, more preferably 10% to 60%. Thereby, it is possible to achieve both the low loss property and the wear resistance at a higher degree.

The domain width of the phase of the polymer component P2 is not specifically limited, but is preferably 200 nm or less.

### <Other polymer components>

Other than the aforementioned polymer components P1 and P2, the rubber component may contain other polymer components as necessary, such as natural rubber, ethylene-propylene copolymer and the like. The other polymer components may be polymers other than the polymer components P1 and P2 selected from the aforementioned polymer components P1 and P2.

### <Filler>

In this disclosure, the filler contains at least silica, and 80% or more of the total amount of the filler exists in the phase of the polymer component P2. Thereby, it is possible to achieve both the low loss property and the wear resistance of the rubber composition at a high degree. It is preferable that 90% or more of the total amount of the filler exists in the phase of the polymer component P2. Thereby, it is possible to achieve both the low loss property and the wear resistance at a higher degree.

The filler may be any one containing at least silica, and may be appropriately selected from conventionally known fillers used in rubber composition for tire, etc. depending on the purpose. Examples of the filler include silica alone, and mixture of silica and carbon black.

The average aggregate area of the filler is not specifically limited, but is preferably 2100 nm² or less, more preferably 1800 nm² or less. Thereby, it is possible to achieve both the low loss property and the wear resistance at a higher degree.

### <Silica>

The content of silica in the filler is not specifically limited and may be appropriately adjusted depending on the purpose. In an embodiment, the ratio of silica in the filler is preferably 60 mass% or more, more preferably 90 mass% or more. Thereby, the ratio of the filler selectively existing in the phase of the polymer component P2 is raised, which enhances the reinforcing effect of the rubber composition, and improves the breaking resistance and the wear resistance. In order to use other fillers such as carbon black in combination, it is preferable that the ratio of silica in the filler is 40 mass% or less.

The type of the silica is not specifically limited, and may be either a silica of an ordinary grade or a special silica subjected to surface treatment according to its usage. For examples, the silica is preferably wet silica. Thereby, it is possible to further improve the processability, the mechanical strength and the wear resistance.

### <Carbon black>

The carbon black is not specifically limited and may be appropriately selected depending on the purpose. For example, the carbon black is preferably one of FEF, SRF, HAF, ISAF, SAF grade, more preferably one of HAF, ISAF, SAF grade.

A content of carbon black in the filler is not specifically limited and may be appropriately adjusted depending on the purpose, as long as silica is contained in the filler. For example, 0 to 40 mass% of the total amount of the filler is preferable.

### <Other components>

Other than the aforementioned rubber component and filler, compounding ingredients generally used in the rubber industry may be appropriately selected and compounded to the rubber composition according to this disclosure. Examples of such compounding ingredient include anti-aging agent, silane coupling agent, thermoplastic resin, vulcanization accelerator (e.g., stearic acid), vulcanization accelerator aid (e.g., zinc oxide), vulcanizing agent (e.g., sulfur), softener (e.g., oil), and wax. These compounding ingredients are preferably commercially available ones.

### <Thermoplastic resin>

The thermoplastic resin is at least one selected from C₅ based resin, C₅ to C₉ based resin, C₉ based resin, terpene based resin, terpene-aromatic compound based resin, rosin based resin, dicyclopentadiene resin or alkylphenol based resin. By containing the thermoplastic resin at a specific amount in the rubber composition, Tg of the rubber is raised and the loss tangent (tan*δ*) at 0°C is improved, which improves the wet gripping performance of the tire.

The thermoplastic resin has high compatibility with natural rubber, and thus is advantageous in the case where natural rubber is used as the rubber component, etc. due to the high compatibility of the thermoplastic resin.

A compounding amount of the thermoplastic resin is not specifically limited and may be appropriately adjusted. The compounding amount of the thermoplastic resin is, e.g., preferably 5 to 50 parts by mass, more preferably 10 to 30 parts by mass per 100 parts by mass of the rubber component. By setting the compounding amount of the thermoplastic resin to 5 to 50 parts by mass, it is possible to achieve both the low loss property and the wet gripping performance at a higher degree.

### <Method for preparing rubber composition >

The method for preparing the rubber composition is not specifically limited and may be a conventionally known method for preparing a rubber composition. For examples, the rubber composition may be produced by compounding to the rubber component the filler, and various compounding agents appropriately selected if necessary, and kneading, warming, extrusion, etc.

### (Tire)

The tire of this disclosure uses the aforementioned rubber composition for a tread member. Thereby, it is possible to provide a tire capable of achieving both the low loss property and the wear resistance at a high degree. Examples of the tread member include tread rubber without being limited thereto.

The tire according to this disclosure is not specifically limited and may be manufactured according to a conventional method, except that the aforementioned rubber composition is used for any one of tread members.

### EXAMPLES

In the following, the present disclosure is described in detail with reference to Examples. However, the present disclosure is no way limited to Examples in below.

Specific materials used in Examples is described below.
Modifier 1: N,N-bis(trimethylsilyl)-3-[diethoxy(methyl)silyl]propylamine, corresponding to the hydrocarbyloxy silane compound of general formula (IV)
Modifier 2: N-(1,3-dimethylbutylidene)-3-triethoxysilyl-1-propaneamine, corresponding to the hydrocarbyloxy silane compound of general formula (V)
Silica: trade name "NipSil AQ", manufactured by Tosoh Silica Corporation
Carbon black: trade name "#80", manufactured by Asahi Carbon Co., Ltd
Process oil: trade name "A/O Mix", manufactured by Sankyo Yuka Kogyo K.K.
Silane coupling agent: bis(3-triethoxysilylpropyl)pertetrasulfide, trade name "Si69", manufactured by Evonik Degussa Corporation
Thermoplastic resin: trade name "Nisseki Neopolymer 140", manufactured by JX Nippon Oil & Energy Corporation
Anti-aging agent: N-(1,3-dimethylbutyl)-N'-phenyl-p-phenylenediamine, trade name "NOCRAC 6C", manufactured by Ouchi Shinko Chemical Industrial Co., Ltd.
Wax: microcrystalline wax, trade name "Ozoace0701", manufactured by Nippon Seiro Co., Ltd.
Vulcanization accelerator 1: bis(2-benzothiazolyl)persulfide, trade name "NOCCELER DM-P", manufactured by Ouchi Shinko Chemical Industrial Co., Ltd.
Vulcanization accelerator 2: 1,3-diphenylguanidine, trade name "NOCCELER D", manufactured by Ouchi Shinko Chemical Industrial Co., Ltd.
Vulcanization accelerator 3: N-(tert-butyl)-2-benzothiazole sulfenamide, trade name "Sanceler NS-G", manufactured by Sanshin Chemical Industry Co., Ltd.

### (Preparation of polymer component P1)

An unmodified polymer A and an unmodified polymer B were prepared as the polymer component P1 according to the following procedure. Position of modified functional group, type of modifier, modification ratio (%) and Tg (°C) of each polymer component P1 were as indicated in Table 1. The modification ratio, Tg and the peak molecular weight were measured according to the aforementioned method.

### (Unmodified polymer A)

A cyclohexane solution of 1,3-butadiene and a cyclohexane solution of styrene were charged in a dry, nitrogen-purged pressure-resistant glass vessel (800 mL), such that 1,3-butadiene monomer was 45 g and styrene was 30 g; 0.6 mmol of 2,2-di(tetrahydrofuryl)propane and 0.6 mmol of n-butyllithium were added thereto; then polymerization was performed at 50°C for 3.0 hours.

### (Unmodified polymer B)

Polymerization reaction was performed similarly as the polymerization of the unmodified polymer A, except a change that 1,3-butadiene was 50 g and styrene was 25 g.

### (Preparation of polymer component P2)

Modified polymers C to E and an unmodified polymer F were prepared as the polymer component P2 according to the following procedure. Position of modified functional group, type of modifier, modification ratio (%) and Tg (°C) of each polymer component P2 were as indicated in Table 1. The modification ratio, Tg and the peak molecular weight were measured according to the aforementioned method.

### (Modified polymer C)

A cyclohexane solution of 1,3-butadiene and a cyclohexane solution of styrene were charged in a dry, nitrogen-purged pressure-resistant glass vessel (800 mL), such that 1,3-butadiene monomer was 67.5 g and styrene was 7.5 g; 0.6 mmol of 2,2-di(tetrahydrofuryl)propane and 0.8 mmol of n-butyllithium were added thereto; then polymerization was performed at 50°C for 1.5 hours. With respect to the polymerization reaction system of which the polymerization conversion rate was approximately 100% at this time, 0.72 mmol of the modifier 1 was added as a modifier, and modification reaction was performed at 50°C for 30 minutes. Afterward, 2 mL of 5 mass% 2,6-di-t-butyl-p-cresol (BHT) in isopropanol was added to terminate the reaction, and the modified polymer C was obtained by drying with an ordinary method. As a result of measuring the microstructure of the obtained modified polymer C, the bound styrene content was 10 mass%, the vinyl content of the butadiene moiety was 40%, and the peak molecular weight was 200,000.

### (Modified polymer D)

A modified polymer D was obtained by performing polymerization reaction and modification reaction similarly as the modified polymer C, except that the modifier 2 was used as a modifier instead of the modifier 1. As a result of measuring the microstructure of the obtained modified polymer D, the bound styrene content was 10 mass%, the vinyl content of the butadiene moiety was 40%, and the peak molecular weight was 200,000.

### (Modified polymer E)

Polymerization reaction and modification reaction were performed similarly as the polymerization of the modified polymer C, except a change that 1,3-butadiene was 57 g, styrene was 19 g, and the additive amount the modifier 1 was 0.4 mmol. As a result of measuring the microstructure of the obtained modified polymer E, the bound styrene content was 10 mass%, the vinyl content of the butadiene moiety was 40%, and the peak molecular weight was 200,000.

### (Unmodified polymer F)

The unmodified polymer F was obtained similarly as the polymerization reaction of the modified polymer C, except that the reaction was performed until the polymerization reaction, without performing the modification reaction. As a result of measuring the microstructure of the obtained unmodified polymer F, the bound styrene content was 10 mass%, the vinyl content of the butadiene moiety was 40%, and the peak molecular weight was 200,000.

**[Table 1]**

| | | Position of modified functional group | Modifier type | Modification ratio (%) | Tg (°C) |
|---|---|---|---|---|---|
| Polymer component P1 | Natural rubber | - | - | - | -73 |
| | Unmodified polymer A (SBR) | - | - | - | -45 |
| | Unmodified polymer B (SBR) | - | - | - | -50 |
| Polymer component P2 | Modified polymer C (modified SBR) | Terminal | Modifier 1 | 74 | -70 |
| | Modified polymer D (modified SBR) | Terminal | Modifier 2 | 75 | -70 |
| | Modified polymer E (modified SBR) | Terminal | Modifier 1 | 40 | -48 |
| | Unmodified polymer F (SBR) | - | - | - | -70 |

### (Examples 1 to 6 and Comparative Example 1)

Rubber compositions were prepared by compounding the following fillers, etc. to rubber components as indicated in Table 2.
Silica: 55 parts by mass
Carbon black: 3.8 parts by mass
Process oil: 1.0 parts by mass
Silane coupling agent: 4.4 parts by mass
Thermoplastic resin: 15 parts by mass
Stearic acid: 2 parts by mass
Anti-aging agent: 1 part by mass
Wax: 2 parts by mass
Zinc oxide: 2.5 parts by mass
Vulcanization accelerator 1: 1.2 parts by mass
Vulcanization accelerator 2: 1.2 parts by mass
Vulcanization accelerator 3: 1 part by mass
Sulfur: 1.8 parts by mass

Each prepared rubber composition was subjected to evaluation of the following (1) to (6). (1) to (3) were measured according to the aforementioned methods. (4) to (6) were measured according to the methods described below.
(1) Filler existence ratio (%) of the phase of the polymer component P2
(2) Domain width (nm)
(3) Average aggregate area of the filler (nm²)
(4) Low loss property (tan*δ*)
(5) Wear resistance
(6) Breaking resistance

### (4) Evaluation of low loss property

With respect to each rubber composition, the loss tangent (tan*δ*) was measured by using a viscoelasticity measurement apparatus (made by Rheometrics Inc.) at the conditions of temperature: 50°C, strain: 5% and frequency: 15 Hz. The obtained value of tan*δ* was indexed, with the value of Comparative Example 1 as 100. The result was as indicated in Table 2. A larger index value indicates better low loss property.

### (5) Evaluation of wear resistance

Each rubber composition was measured of an abrasion amount at a slip rate of 60% at room temperature, by using a Lambourn abrasion tester. The reciprocal of the obtained value of abrasion amount was represented as an index, with the value of Comparative Example 1 as 100. The result was as indicated in Table 2. A larger index value indicates a less abrasion amount and better wear resistance.

### (6) Evaluation of breaking resistance

Regarding each rubber composition, tensile test was performed at room temperature according to JIS K 6251, and a tensile strength of a vulcanized rubber composition was measured and indexed with the value of Comparative Example 1 as 100. The result was as indicated in Table 2. A larger index value indicates better breaking resistance.

**[Table 2]**

| | | | | | | | | | |
|---|---|---|---|---|---|---|---|---|---|
| Rubber component formulation | Component | | Comparative Example 1 | Example 1 | Example 2 | Example 3 | Example 4 | Example 5 | Example 6 |
| | Polymer component P1 | Natural rubber (Tg₁ = -73°C) | 50 | 50 | 50 | 50 | - | 70 | 30 |
| | | Unmodified polymer A (Tg₁ = -45°C) | - | - | - | - | - | - | - |
| | | Unmodified polymer B (Tg₁ = -50°C) | - | - | - | - | 50 | - | - |
| | Polymer component P2 | Modified polymer C (Tg₂ = -70°C) | - | - | 50 | - | 50 | 30 | 70 |
| | | Modified polymer D (Tg₂ = -70°C) | - | - | - | 50 | - | - | - |
| | | Modified polymer E (Tg₂ = -48°C) | 50 | - | - | - | - | - | - |
| | | Unmodified polymer F (Tg₂ = -70°C) | - | 50 | - | - | - | - | - |
| | \|Tg₁ - Tg₂\| | | 25 | 3 | 3 | 3 | 20 | 3 | 3 |
| Morphology | Insolubility of phases | | Insoluble | Insoluble | Insoluble | Insoluble | Insoluble | Insoluble | Insoluble |
| | Filler existence ratio (%) of the phase of the polymer component P2 | | 80 | 80 | 90 | 90 | 80 | 85 | 95 |
| | Domain width (nm) | | 300 | 150 | 150 | 150 | 200 | 150 | 150 |
| | Average aggregate area of the filler (nm²) | | 2000 | 2200 | 1700 | 1700 | 1700 | 1900 | 1400 |
| Performance evaluation | Low loss property | | 100 | 100 | 118 | 116 | 114 | 109 | 128 |
| | Wear resistance | | 100 | 104 | 118 | 117 | 108 | 123 | 110 |
| | Breaking resistance | | 100 | 102 | 105 | 105 | 95 | 108 | 102 |

As indicated in Table 2, as compared to Comparative Example 1, in which the difference of Tg₁ and Tg₂ is larger than 20, the Examples, in which the relation 0 < |Tg₁-Tg₂| ≤ 20 is satisfied and the polymer components P1 and P2 are insoluble in sub-micron order, are capable of achieving both the low loss property and the wear resistance at a high degree. Further, as compared to Example 1, in which the polymer component P2 is an unmodified polymer, Examples 2 and 3, in which the polymer component P2 is a modified SBR, have more filler existing in the phase of the polymer component P2, and are capable of achieving both the low loss property and the wear resistance at a higher degree.

### INDUSTRIAL APPLICABILITY

According to this disclosure, it is possible to provide a rubber composition capable of achieving both the low loss property and the wear resistance at a high degree. Moreover, according to this disclosure, it is possible to provide a tire capable of achieving both the low loss property and the wear resistance at a high degree.

## Claims

1. A rubber composition comprising:
a rubber component comprising at least a polymer component P1 and a polymer component P2; and
a filler comprising at least silica, wherein:
a glass-transition temperature Tg₁ of the polymer component P1 and a glass-transition temperature Tg₂ of the polymer component P2 satisfy a relation that 0 < |Tg₁-Tg₂| ≤ 20;
the polymer components P1 and P2 are insoluble to each other in sub-micron order; and
80% or more of a total amount of the filler exists in a phase of the polymer component P2.

2. The rubber composition according to claim 1, wherein:
a domain width of the phase of the polymer component P2 is 200 nm or less.

3. The rubber composition according to claim 1 or 2, wherein:
an average aggregate area of the filler existing in the phase of the polymer component P2 is 2100 nm² or less.

4. The rubber composition according to any one of claims 1 to 3, wherein:
the polymer component P1 is natural rubber or isoprene rubber; and
the polymer component P2 is a modified polymer.

5. The rubber composition according to claim 4, wherein:
a modification ratio of the modified polymer is 70% or more.

6. The rubber composition according to claims 4 or 5, wherein:
the modified polymer is modified with:
a hydrocarbyl oxysilane compound represented by the following general formula (IV): 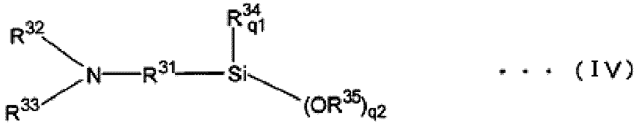 where q1+q2=3, q1 is an integer of 0 to 2, and q2 is an integer of 1 to 3; R³¹ is a C₁ to C₂₀ divalent aliphatic or alicyclic hydrocarbon group or a C₆ to C₁₈ divalent aromatic hydrocarbon group; R³² and R³³ are independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more; or
a hydrocarbyl oxysilane compound represented by the following general formula (V): 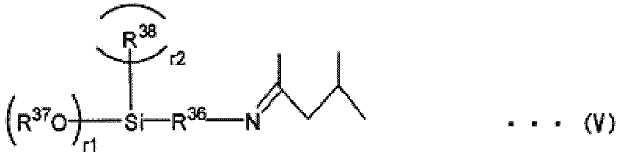 where r1+r2=3, r1 is an integer of 1 to 3, and r2 is an integer of 0 to 2; R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

7. The rubber composition according to any one of claims 1 to 6, wherein:
a ratio of the polymer components P2 to a total amount of the rubber component is 5% to 60%.

8. The rubber composition according to any one of claims 1 to 7, wherein:
a ratio of silica in the filler is 60 mass% or more.

9. A tire using the rubber composition according to any one of claims 1 to 8 for a tread member.
